**Europäisches Patentamt**

**European Patent Office**

**Office européen des brevets**

(19)

(11) Veröffentlichungsnummer: **0 140 983**
**B1**

(12) **EUROPÄISCHE PATENTSCHRIFT**

(45) Veröffentlichungstag der Patentschrift:
**20.05.87**

(21) Anmeldenummer: **83109056.8**

(22) Anmeldetag: **14.09.83**

(51) Int. Cl.⁴: **B 23 H 7/26**

(54) Verfahren und Vorrichtung an einer Werkzeugmaschine zum Ansteuern einer Einrichtposition zwischen Werkstück und Werkzeug, insbesondere an einer Elektroerosionsmaschine.

(43) Veröffentlichungstag der Anmeldung:
**15.05.85 Patentblatt 85/20**

(45) Bekanntmachung des Hinweises auf die Patenterteilung:
**20.05.87 Patentblatt 87/21**

(84) Benannte Vertragsstaaten:
**CH DE FR IT LI**

(56) Entgegenhaltungen:
**DE-A-1 615 089**
**US-A-3 650 923**

(73) Patentinhaber: **Schiess Aktiengesellschaft Geschäftsbereich Nassovia, Nassoviastrasse 2 Postfach 12 20, D-6070 Langen (Hessen) (DE)**

(72) Erfinder: **Woerner, Robert, Heinrichstrasse 7, D-6117 Schaafheim (DE)**

(74) Vertreter: **Allgeier, Kurt, Hiebsch & Allgeier Patentanwälte Erzbergerstrasse 5a Postfach 464, D-7700 Singen 1 (DE)**

EP 0 140 983 B1

**Beschreibung**

Die Erfindung bezieht sich auf ein Verfahren und eine Vorrichtung an einer Werkzeugmaschine zum Ansteuern einer Einrichtposition zwischen Werkstück und Werkzeug mittels einer zwischen diesen beiden mit Einrichtgeschwindigkeit aufeinander zubewegten Teilen angelegten Hilfsspannung. die beim Berühren der beiden Teile zusammenbricht. Nach dem Einspannen des Werkzeugs im Werkzeughalter und dem Aufspannen des Werkstückes auf der Spannplatte oder in einer Aufspannvorrichtung an einer Werkzeugmaschine müssen die beiden Teile zueinander in eine bestimmte Relativlage, die Einrichtposition, gebracht werden, damit bei Beginn der Arbeitsoperationen das Werkzeug an der vorgesehenen Stelle am Werkstück angreift.

Beispielsweise bei Funkenerosionsmaschinen bedient man sich zu diesem Zweck einer Hilfsspannung zwischen Werkzeug und Werkstück, die man beim Einrichten einschaltet. Werkzeug und Werkstück werden dann relativ zueinander aufeinander zubewegt. Bei Annäherung von Werkzeug und Werkstück beginnt die Hilfsspannung zu sinken, und bei Kontakt bzw. Sichberühren von Werkzeug und Werkstück bricht sie zusammen. Die Größe der Spannung dient somit als Maß für den Abstand von Werkzeug und Werkstück. Aus der Veränderung des Abstandes zwischen Werkzeug und Werkstück ergeben sich somit bestimmte Spannungsgrößen. Wenn diese Spannungsgröße den Wert der Einrichtspannung erreicht, die dem für die vorgesehene Einrichtposition maßgebenden Arbeitsspalt entspricht, ist die Einrichtposition erreicht und der Einregelvorgang beendet.

In der Praxis sind mehrere Arbeitsweisen zum Einstellen der Einrichtposition üblich. Bei einer Verfahrensweise wird der Abstand zwischen Werkstück und Werkzeug so lange verändert, bis die Hilfsspannung als Einrichtspannung einen bestimmten Wert erreicht. Diese Methode wird hauptsächlich angewendet, wenn Werkstücke oder Werkzeug auf von Hand verstellbaren Schlitten eingerichtet werden. Bei Überfahren des Einrichtspaltes kehrt man die Bewegungsrichtung um, und mit gegenüber der ursprünglichen Einrichtgeschwindigkeit verringerter Schleichgeschwindigkeit wird der Abstand zwischen Werkstück und Werkzeug wieder so lange vergrößert, bis die für den Arbeitsspalt maßgebende Einrichtspannung erreicht wird. Zur Beobachtung dient ein Instrument, das im Ergebnis die Einrichtspannung anzeigt. Von Hand läßt sich dieser Vorgang so lange durchführen, bis der gewünschte Einrichtspannungswert erreicht ist. Dieser Vorgang ist für automatisierte Prozesse nicht gut geeignet, da er je nach Zufälligkeit in anderen Reihenfolgen ablaufen muß.

Bei einem anderen Verfahren wird der Abstand zwischen Werkstück und Werkzeug so lange verringert, bis Werkstück und Werkzeug sich berühren. In der Stellung, in der die Hilfsspannung zusammenbricht, wird der Bezugspunkt für die gegenseitige Stellung abgeleitet. In einigen Fällen wird diese Stelle direkt als Bezugspunkt gesetzt, in anderen Fällen wird der Abstand vorher um einen bestimmten Betrag vergrößert, bevor der Bezugspunkt gesetzt wird. Diese Methode wird sowohl zum Einrichten von Hand als auch zum automatischen Einrichten benutzt.

Durch die Europäische Patentanmeldung 0058 769 ist eine Verfahrensweise bekannt geworden, die ebenfalls von einem durch die Spannung im Arbeitsspalt über eine Analogsteuerung kontinuierlich zustellbaren Zustellantrieb ausgeht, und die darin besteht, daß der Analogsteuerung jeweils definierten Wegvorgaben entsprechende, definierte Spannungsimpulse zugeführt werden, wobei nach jedem Spannungsimpuls abgefragt wird, ob Berührungskontakt zwischen Elektrode und Werkstück vorliegt oder nicht, und daß bei vorhandenem Berührungskontakt die Zufuhr weiterer Spannungsimpulse unterbrochen wird, wobei die Wegvorgaben kleiner sein sollen, als die beim Auffahren der Elektrode auf das Werkstück höchstzulässige Stauchung der Elektrode bzw. der diese tragenden Bauteile. Bei diesem Verfahren soll durch das Annähern der Elektrode an das Werkstück in einer Folge von kleinsten Einzelschritten mit jeweiligem Zwischenstopp das Erreichen der Einrichtposition unmittelbar ermöglicht werden, ohne daß ein Wiederzurückbewegen vorgesehen ist.

Diese bekannten Verfahrensweisen bringen jedoch einige systembedingte Unsicherheiten mit sich und weisen daher Nachteile auf:

a) Bei Sichberühren von Werkzeug und Werkstück und damit Spannungszusammenbruch ist durch Massenträgheit und Schaltverzögerungen das Anhalten der Relativbewegung zwischen Werkzeug und Werkstück mit Fehlern behaftet. Das Zurücklaufen um einen bestimmten Weg ist ein Versuch, diesen Fehler zu verkleinern;

b) die Verfahren verlangen, daß Werkstück und Werkzeug sauber sind, d.h. es dürfen keine Materialabtragspartikel und kein Dielektrikum an der Berührungsstelle vorhanden sein;

c) bei hoher Einrichtspannung kann sich ein Lichtbogen bilden, bei dem Material zwischen Werkstück und Werkzeug aufgebaut wird, was ebenfalls zu Ungenauigkeiten führt.

Diese Nachteile werden auch durch einen weiteren bekannten Vorschlag nach der US-A-3 650 923 nicht beseitigt, der ebenfalls mit einem Einrichtstromkrsis zur Erzeugung einer Einrichtspannung arbeitet und über eine Meß- und Auswertungsanordnung der Einrichtspannung über einen Signalgeber in Verbindung mit einem Befehlsgeber den Verstellmotor für die Anstellbewegung steuert.

Der Erfindung lißegt die Aufgabe zugrunde, ein demgegenüber verbessertes und nicht mit den zuletzt beschriebenen Nachteilen behaftetes Verfahren zum Ansteuern einer Einrichtposition zwischen Werkzeug und Werkstück bei einer Werkzeugmaschine zu schaffen. Die erfindungsgemäß vorgeschlagene Lösung wendet ebenfalls eine zwischen Werkzeug und Werkstück mittels einer zwischen diesen beiden mit Einrichtgeschwindigkeit aufeinander zubewegten Teilen angelegten Analog-Hilfsspannung an, und sie besteht darin, daß diese beim Berühren der beiden Teile zusammenbricht, den Anstell-Antrieb abschaltet und einen Rückstellantrieb einschaltet, der beide Teile mit einer kleineren Rückstellgeschwindigkeit im Schleichgang auf einen geringen Abstand zur Einleitung der darauf einsetzenden ersten Positionier-Regelphase auseinanderbewegt, bei welcher durch die Positionierregelspannung im Spalt zwischen beiden Teilen gesteuert deren Abstand voneinander um den vorgewählten Einrichtabstand oszillierend zwischen einer Maximal- und Minimalgröße mit hoher Verstellfrequenz verändert wird, und daß darauf im Schleichgang der Abstand zwischen beiden Teilen wieder vergrößert und darauf sofort wieder verkleinert wird, worauf sich eine zweite oder mehrere weitere darauffolgende Positionier-Regelphasen anschließen, bei denen ebenfalls mit hoher Verstellfrequenz der Abstand der Teile um den vorgewählten Einrichtabstand oszillierend zwischen einer geringeren Maximal- und Minimalgröße jedesmal verringert wird, bis der der Einrichtspannung als Führungsgröße entsprechende Spaltabstand zwischen Werkstück und Werkzeug erreicht und damit die vorgewählte Einrichtposition eingestellt ist.

Dabei kann in der Positionier-Regelphase der einzelne Zyklus des Auseinanderbewegens und Wiederannäherns zeitabhängig oder spannungsabhängig gesteuert sein, und von dem zuletzt eingenommenen Abstand zwischen Werkstück und Werkzeug und der dadurch bestimmten Stellung des Schlittens kann das Bezugsmaß für die anzufahrende Einrichtposition abgeleitet werden.

Das Verfahren nach der Erfindung weist gegenüber dem Stand der Technik eine Reihe von Vorteilen auf. Beispielsweise gegenüber dem Verfahren nach der EPA-Veröffentlichung 0 058 769 weist es eine wesentlich höhere Einrichtgeschwindigkeit auf, so daß der Einrichtvorgang rascher abläuft. Gegenüber der eingangs erwähnten vorzugsweise manuell gesteuerten Verfahren besteht der Vorteil, daß damit ein selbsttätig ablaufendes Verfahren vorgeschlagen wird, welches mit einfachen Mitteln, jedoch höherer Treffsicherheit und Effizienz, ein wesentlich rascheres Ansteuern der Einrichtposition ermöglicht.

Es hat sich überraschenderweise gezeigt, daß durch die mehrmalige Wiederholung des Einstellvorganges die bisherigen Ungenauigkeiten bei der Positionierung ausgeschaltet werden können. Ist beispielsweise an der Kontaktstelle Dielektrikum oder eine andere Flüssigkeit vorhanden, so wird diese durch mehrmaliges Anfahren verdrängt, wodurch die dielektrischen Zustände an der Kontaktstelle verbessert werden. Kleinere Verschmutzungen beispielsweise durch Späne oder Abbrand, werden ebenfalls durch dieses mehrmalige Positionsregeln entfernt. Wird mit höheren Einrichtspannungen gearbeitet, wodurch sich Lichtbögen zwischen Werkzeug und Werkstück bilden können, so wirkt das mehrmalige Anfahren wie das Abschalten eines Erosionsimpulses und verhindert somit einen Materialaufbau an der Berührungsstelle. Auch dadurch wird die Genauigkeit bei der Spalteinstellung weiter erhöht.

Der Meßzyklus kann von Hand eingeleitet werden, um für den Beginn des Einrichtens eine genaue Ausgangssituation herzustellen. Er kann manuell oder auch automatisch jederzeit während eines Arbeitsablaufes abgerufen werden. Er kann dazu dienen, beispielsweise bei einer Funkenerosionsmaschine den Elektrodenverschleiß zu kompensieren, wenn mit einem Werkzeug nacheinander mehrere Gravuren erodiert werden. Dabei wird der Meßzyklus jedesmal dann abgerufen, wenn mit dem Werkzeug die Bearbeitung einer neuen Gravur begonnen wird.

Für die Durchführung des erfindungsgemäßen Verfahrens ist allein die Relativbewegung zwischen Werkzeug und Werkstück maßgebend, d.h. es ist unerheblich, ob der Werkstückschlitten gegen das Werkzeug bewegt wird oder umgekehrt. Die Vorrichtung zur Durchführung des Verfahrens weist einen Einrichtungsstromkreis zur Erzeugung der Einrichtspannung, eine Meß- und Auswertungsanordnung mit einem Signalgeber in Verbindung mit einem Befehlsgeber für den Verstellmotor zur Steuerung der Anstell- und Rückstellbewegung sowie eine Programmsteuerung für die Zyklus-Wiederholung auf. Sie ist daher wesentlich einfacher und somit weniger aufwendig, als beispielsweise die Vorrichtung nach der DE-OS 28 16 780 zur zeitoptimalen Ansteuerung einer Zielposition in einem Zielgebiet, bei der die Zielvorgabe als SOLL-Wert in einem Speichermedium eingespeichert ist und über einen digitalen Subtrahierer, einen Quadranten-Identifikator und zugleich einen Auslese-Speicher, einen Geschwindigkeitskomparator, eine Geschwindigkeits-Differenzstufe, einen Analog-Digital-Konverter binäre Signale für das Vorzeichen - in Abhängigkeit vom Quadrantenbereich- und die Geschwindigkeit (Winkelgeschwindigkeit und translatorische Geschwindigkeit) formt und zu einem analogen Ausgangssignal für die Steuerschaltung des Stellmotors verarbeitet. Mit der Einspeicherung der Zielvorgabe sind jedoch die oben beschriebenen Nachteile verbunden, da diese Messungen voraussetzt, deren Ergebnisse durch die erwähnten Verunreinigungen im Bereich des Werkstückes und auch des Werkzeugs verfälscht sein können, obwohl diese Vorrichtung nicht mit einer Einrichtungsspannung arbeitet.

In der Zeichnung sind das erfindungsgemäße Verfahren und eine zu dessen Durchführung geeignete Vorrichtung dargestellt und näher beschrieben. Das Ausführungsbeispiel bezieht sich auf eine Funkenerosionsmaschine, ohne daß jedoch der Anwendungsbereich der Erfindung auf eine solche beschränkt ist.

Es zeigen

Fig. 1a bis 1c schematisch den Ablauf des Steuervorganges

Fig. 2 eine Schemadarstellung der Vorrichtung zur Durchführung des erfindungsgemäßen Verfahrens

Fig. 3 ein Weg-Zeit-Diagramm des Positioniervorganges

Fig. 4 ein Weg-Spannungsdiagramm des Positioniervorganges.

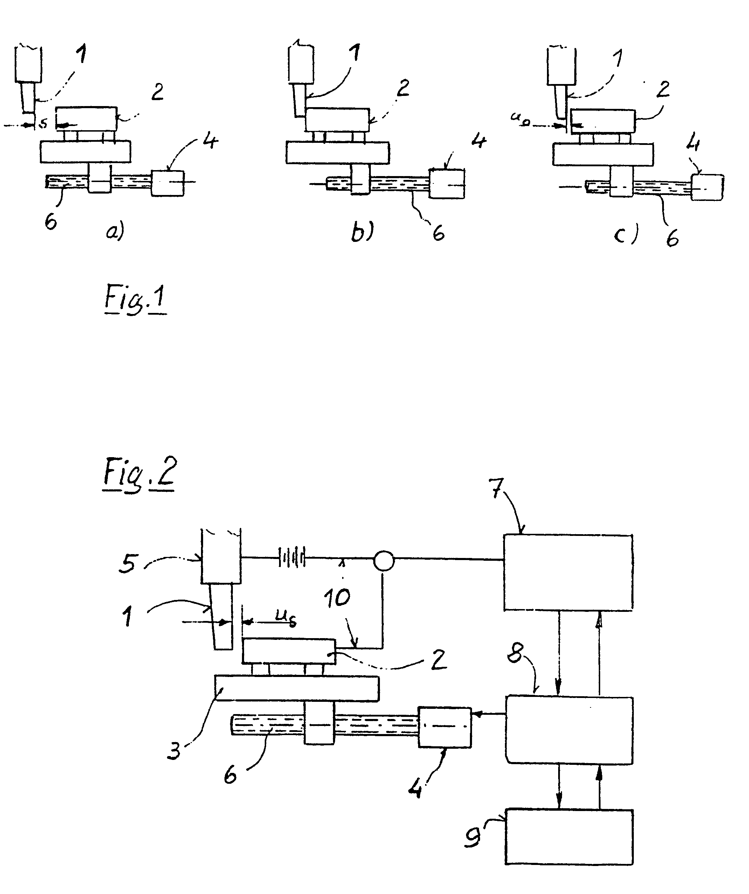

Gemäß Fig. 1a wird zum Einstellen der Einrichtposition der Werkstückschlitten 3 mit Einrichtgeschwindigkeit an das Werkzeug 1 herangefahren. Bei Sichberühren von Werkzeug 1 und Werkstück 2 bricht zwischen Werkzeug und Werkstück die eingeschaltete Hilfs- bzw. Einrichtspannung zusammen, und die Vorschubgeschwindigkeit des Motors 4 in beiden Richtungen wird auf Schleichganggeschwindigkeit (Fig. 1b) umgeschaltet, die niedriger ist als die ursprüngliche Einrichtgeschwindigkeit. In diesem Schleichgang wird anschließend der Spalt zwischen Werkzeug und Werkstück geregelt, und zwar durch Verstellen des Schlittens mit der Hilfs- bzw. Einrichtspannung als Führungsgröße. Nach dem Sichberühren von Werkzeug und Werkstück und damit Zusammenbrechen der Hilfsspannung wird der Abstand zwischen Werkzeug und Werkstück mit Schleichgeschwindigkeit vergrößert und so lange eingeregelt, bis die Hilfsspannung den Wert der dem vorgesehenen Arbeitsspalt entsprechenden Einrichtspannung erreicht.

Um die oben behandelten Ungenauigkeiten zu vermeiden, wird anschließend nach Erreichen der Einrichtspannung der Abstand zwischen Werkzeug und Werkstück wieder mit Schleichgeschwindigkeit geringfügig vergrößert, bevor dann mit Schleichgeschwindigkeit Werkzeug und Werkstück wieder angenähert werden, um anschließend den Abstand wieder zu vergrößern und zu verringern, bis die Hilfsspannung wieder den Wert der Einrichtspannung erreicht, wie dies in Fig. 1b und c schematisch angedeutet ist. Von der zuletzt eingenommenen Stellung des Schlittens wird das Bezugsmaß für die Stellung von Werkzeug und Werkstück abgeleitet.

Dieses als Positionier-Regelphase bezeichnete Vergrößern und Verringern des Abstandes bis zum Berühren wird mehrmals in je einem Zyklus wiederholt, um die Unsicherheit der Spaltbestimmung zu verringern. Ist an der Kontaktstelle Dielektrikum oder eine Verunreinigung, z.B. Abtragpartikel oder Abbrand, so werden diese durch das mehrmalige Anfahren verdrängt und zum Abfließen gebracht. Dadurch wird das Meßergebnis in der Kontaktstellung optimal verbessert und damit eine exakte Ausgangslage für die Bestimmung der Größe des Arbeitsspaltes hergestellt.

Bei festgelegten Werten im Stromkreis, der die Einrichtspannung $U_s$ erzeugt, ist die Abweichung der Spaltgröße bei einem diskreten Spannungswert sehr gering und daher verwendbar bei Maschinen, an die hohe Genauigkeitsanforderungen gestellt werden.

In Fig. 2 ist der Werkzeugschlitten mit 1 und dessen Stellmotor mit 3 bezeichnet. Auf dem Schlitten ein Werkstück 2 aufgespannt. Im Werkzeughalter 5 ist ein Werkzeug 1 - im Ausführungsbeispiel eine Elektrodeeingespannt. An die Werkzeughalter 5 und an das Werkstück 2 ist mittels der Leitungen 10 eine Hilfsspannung, $U_s$ angelegt. Diese wird als IST-Spannung in der Meß- und Auswertungsanordnung 7 gemessen und mit einer vorgegebenen SOLL-Spannung verglichen, und die Vergleichsergebnisse werden über deren Signalgeher einem Befehlsgeber 8 zugeleitet, der diese zu Stellbefehlen für Richtung und Geschwindigkeit verarbeitet und den Stellmotor 3 steuert. Mit 9 ist die Programmsteuerung für die Zykluswiederholung bezeichnet, die ebenfalls den Befehlsgeber 8 für den Stellmotor 3 beeinflußt, und zwar dahingehend, wie oft und in weichen Zeitintervallen der Anfahrzyklus wiederholt wird.

Der gesamte Zyklusablauf kann willkürlich während der Bearbeitung durch einen manuell eingegebenen Steuerbefehl abgerufen und durchgeführt werden, um die Genauigkeit der Bearbeitung - ausgehend von dem ursprünglich eingespeicherten Positionswert - frei von bearbeitungs- oder verfahrensverursachten Abweichungen wiederherzustellen, oder derartige Zwischenkontrollen können auch in die Programmsteuerung für die Zyklus-Wiederholung vorprogrammiert eingegeben werden.

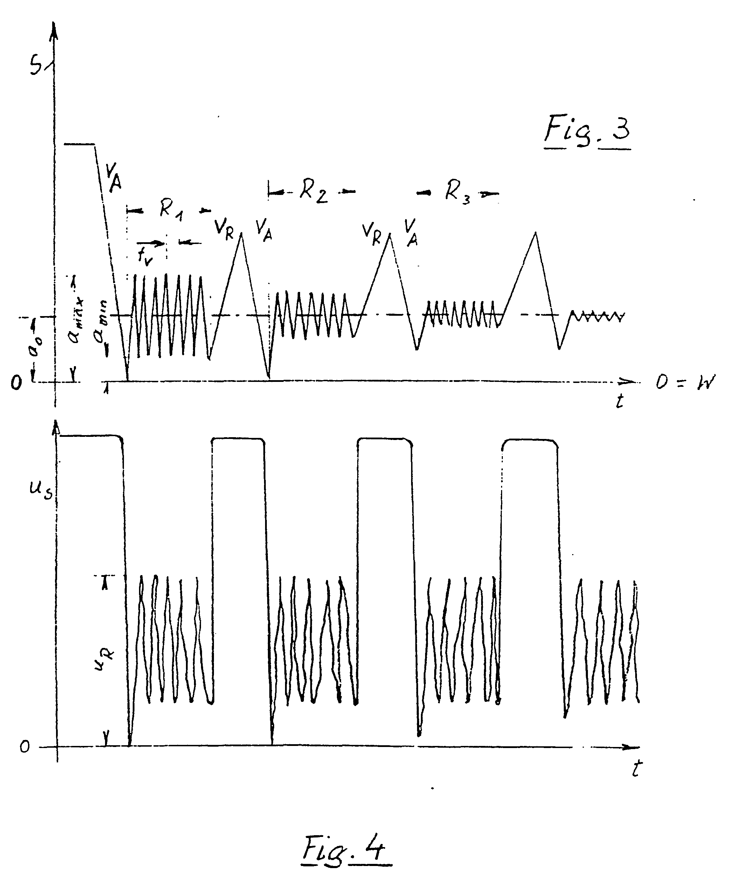

In Fig. 3 ist auf der Ordinate die Wegstrecke S als Abstand vom Werkstück W bezeichnet. Der gewunschte Abstand zwischen Werkzeug und Werkstück als Einrichtposition ist mit $a_o$ angegeben. Mit Beginn des Positioniervorganges nähert sich das Werkzeug mit der Einrichtgeschwindigkeit $V_A$ dem Werkstück W (der Abszisse O = t) bis zum Berührungspunkt. Dabei bricht die Einrichtspannung $U_s$ zusammen - siehe Fig. 4 - und darauf folgt ein erster Steuerungszyklus zur Positionsregelung $R_1$ mit einer hohen Regelfrequenz $f_v$ des Auseinanderbewegens und Wiederannäherns zwischen Werkzeug und Werkstück zwischen den Werten $a_{max}$ und $a_{min}$, welche um den Wert der Einrichtposition $a_o$ oszillieren. Nach Beendigung dieses ersten Steuerungszyklus $R_1$ erfolgt im Schleichgang ein Auseinanderbewegen $V_R$ und ein Wiederannähern $V_A$ bis zur Berührung des Werkstückes W - siehe auch das Weg-Spannungsdiagramm Fig. 4 -, worauf ein zweiter Steuerungszyklus zur Positionsregelung $R_2$ folgt. Dieser Vorgang wiederholt sich noch zweimal, wobei die Maximal- und Minimal-Abstände $a_{max}$ und $a_{min}$ bei der Abstandsoszillation zwischen Werkzeug und Werkstück jedesmal geringer werden, bis ein Endwert erreicht ist. Dieser entspricht dem Führungswert der Spannung, durch welche die Spaltgröße zwischen Werkzeug und Werkstück als Abstand $a_o$ bestimmt ist, womit der Positioniervorgang beendet ist. Der entsprechende Verlauf der Einrichtspannung ist aus Fig. 4 ersichtlich. Die Einrichtspannung $u_s$ ist auf der Ordinate, der Zeitablauf t auf der Abszisse aufgetragen. Die Einregelspannung in ihrer jeweiligen Größe ist mit $u_R$ bezeichnet.

Der in den Fig. 3 und 4 dargestellte Positionier-Ablauf ist nur als ein ausgewähltes Beispiel der Durchführung des erfindungsgemäßen Verfahrens zu betrachten. Der Ablauf kann in vielfacher Weise hinsichtlich der vorgesehenen Ahstände vom Werkstück, der Anzahl der Positionier-Zyklen und deren Frequenzen wie auch der gewählten Spannungsgrößen abgewandelt werden, ohne den Bereich der Erfindung zu verlassen.

**Patentansprüche**

1. Verfahren an einer Werkzeugmaschine zum Ansteuern einer Einrichtposition zwischen Werkzeug und Werkstück mittels einer zwischen diesen beiden mit Einrichtgeschwindigkeit aufeinander zubewegten Teilen angelegten Analog-Hilfsspannung, die infolge des Berührens der beiden Teile zusammenbricht und den Anstell-Antrieb abschaltet,
dadurch gekennzeichnet,
daß beim Berühren der beiden Teile (1, 2) und Abschalten des Anstell-Antriebs (3) ein Rückstell-Antrieb eingeschaltet wird, der beide Teile (1, 2) mit einer kleineren Rückstellgeschwindigkeit im Schleichgang auf einen geringen Abstand (s) zur Einleitung der darauf einsetzenden ersten Positionier-Regelphase (R) auseinanderbewegt, bei welcher durch die Positionierregelspannung ($u_R$) im Spalt (S) zwischen beiden Teilen (1, 2) gesteuert deren Abstand voneinander um den vorgewählten Einrichtabstand ($a_o$) oszillierend zwischen einer Maximal- und Minimalgröße ($a_{max}$, $a_{min}$) mit hoher Verstellfrequenz ($f_v$) verändert wird, und daß darauf im Schleichgang der Abstand (s) zwischen beiden Teilen (1, 2) wieder vergrößert und darauf sofort wieder verkleinert wird, worauf sich eine zweite oder mehrere weitere daraufffolgende Positionier-Regelphasen anschließen, bei denen ebenfalls mit hoher Verstellfrequenz ($f_v$) der Abstand (s) der Teile um den vorgewählten Einrichtabstand ($a_o$) oszillierend zwischen einer geringeren Maximal- und Minimalgröße ($a_{max}$, $a_{min}$) jedesmal verringert wird, bis der der Einrichtspannung ($u_s$)

als Führungsgröße entsprechende Spaltabstand ($a_o$) zwischen Werkstück (2) und Werkzeug (1) erreicht und damit die vorgewählte Einrichtposition eingestellt ist.

2. Verfahren nach Anspruch 1
dadurch gekennzeichnet,
daß in der positionier-Regelphase der einzelne Zyklus des Auseinanderbewegens und Wiederannäherns zwischen Werkstück (2) und Werkzeug (1) zeitabhängig gesteuert wird.

3. Verfahren nach Anspruch 1
dadurch gekennzeichnet,
daß in der Positionier-Regelphase der einzelne Zyklus des Auseinanderbewegens und Wiederannäherns zwischen Werkstück (2) und Werkzeug (1) spannungsabhängig gesteuert wird.

4. Verfahren nach Anspruch 1
dadurch gekennzeichnet,
daß einer oder mehrere aufeinanderfolgende Positionier-Regelphasen zu jedem beliebigen Zeitpunkt bzw. Bearbeitungszustand eingeleitet werden können.

5. Verfahren nach den Ansprüchen 1 bis 3
dadurch gekennzeichnet,
daß von dem zuletzt eingenommenen Abstand ($a_o$) zwischen Werkstück und Werkzeug und der dadurch bestimmten Stellung des Schlittens das Bezugsmaß für die anzufahrende Einrichtposition abgeleitet wird.

6. Vorrichtung an einer Werkzeugmaschine zum Ansteuern einer Einrichtposition zwischen Werkstück und Werkzeug, insbesondere an einer Elektroerosionsmaschine, mit einem Stromkreis zur Erzeugung einer Einrichtspannung, einer Meß-und Auswertungsanordnung der Einrichtspannung und einem Signalgeber sowie Befehlsgeber für den Verstellmotor, dadurch gekennzeichnet,
daß zur Durchführung des Verfahrens nach einem der Ansprüche 1 bis 5 die Meß- und Auswertungsanordnung (7) eine Meßvorrichtung für die Positionierregelspannung ($u_R$) und eine Einstellvorrichtung für den vorzuwählenden Einrichtabstand ($a_o$) aufweist und eine Programmsteuerung (9) mit einem Oszillator zum Einstellen der Verstellfrequenz ($f_v$) der Zyklus-Wiederholung der aufeinanderfolgenden Regelphasen durch oszillierendes Vergrößern und Verkleinern des Abstandes (s) zwischen Werkstück (2) und Werkzeug (1) enthält.

**Claims**

1. A method for controlling the position of a tool relative to the workpiece in a machine tool by means of an analog auxiliary voltage applied between these two parts, which are approached by means of a setup velocity, the voltage collapsing as a result of the contact of the two parts and switching off the starting drive, characterized in that
when the two parts (1, 2) are contacted and the starting drive (3) switched off, a restoring drive is switched on, which separates the two parts (1, 2) by means of a smaller restoring velocity, in the creep speed, to a small distance (s) in order to introduce the subsequent first position control phase (R) in which the distance between the two parts (1, 2) around the preselected setup distance $(a_o)$ ia changed oscillatingly between a maximum- and a minimum magnitude $(a_{max}, a_{min})$ with a high adjusting frequency $(f_v)$, this change being controlled by means of the position control voltage $(u_R)$ in the gap (S) between the two parts (1, 2), and that thereupon, in the creep speed, the distance (s) between the two parts (1, 2) is increased again and immediately afterwards reduced, whereupon two or several position control phases will follow, in which the distance (s) between the parts is also reduced oscillatingly each time around the preselected distance $(a_o)$ with a high adjusting frequency $(f_v)$ between a smaller maximum- and minimum magnitude $(a_{max}, a_{min})$ until the gap spacing $(A_o)$ between the workpiece (2) and the tool (1) corresponding to the setup voltage $(u_s)$ as command signal is obtained and thus the preselected setup position adjusted.

2. A method according to claim 1, characterized in that in the position control phase each cycle of the separation and approach between the workpiece (2) and the tool (1) is controlled time dependently.

3. A method according to claim 1, characterized in that in the position control phase each cycle of the separation and approach between the workpiece (2) and the tool (1) is controlled depending on the voltage.

4. A method according to claim 1, characterized in that one or several position control phases can be initiated at any time and at any processing state respectively.

5. A method according to the claims 1 to 3, characterized in that the absolute dimension for the setup position to take is deduced from the distance last taken $(a_o)$ between the workpiece and the tool and from the position of the slide thus determined.

> 6. A device for controlling the position of the tool relative to the workpiece in a machine tool, especially an electrical discharage machine, having a circuit for the generation of a setup voltage, a measuring- and analysis arrangement of the setup voltage and a signal transmitter and a command emitter as well for the adjusting motor, characterized in that for the working of the process according to one of the claims 1 to 5 the measuring- and analysis arrangement (7) is provided with a measuring device for the position control voltage $(u_R)$ and an adjusting device for the distance to preselect $(a_o)$ and contains a program control (9) with an oscillator for adjusting the adjusting

frequency $(f_v)$ of the cycle repetition of the successive control phases by increasing and reducing the distance (s) between the workpiece (2) and the tool (1) oscillatingly.

**Revendications**

1. Procédé à une machine-outil pour l'amorçage d'une position initiale entre l'outil et la pièce d'oeuvre à l'aide d'une tension analogique mise entre ces deux pièces qui ont été approchées à vitesse de réglage, laquelle s'annule par suite du contact des deux pièces et débranche le mécanisme de mise en marche, caractérisé en ce que au contact des deux pièces (1, 2) et à l'interruption du mécanisme de mise en marche (3) vient branché un mécanisme de rappel lequel sépare les deux pièces (1, 2) l'une de l'autre à une vitesse de rappel inférieure, en avance lente, jusqu'à une distance inférieure (s) pour le déclenchement de la première phase de positionnement et de réglage (R) commençant ensuite et lors de laquelle vient changée la distance entre les deux pièces (1, 2) oscillant autour de la distance initiale présélectée $(a_o)$ entre une grandeur maximale et minimale $(a_{max}, a_{min})$ avec une haute fréquence de réglage $(f_v)$, ce changement étant commandé par la tension de positionnement et de réglage $(u_R)$ dans l'entrefer (s) entre les deux pièces (1, 2), et que ensuite, en avance lente, la distance (s) entre les deux pièces (1, 2) vient encore augmentée et tout de suite de nouveau diminuée, cela suivie ensuite d'une deuxième ou de plusieurs phases de positionnement et de réglage succesives pendant lesquelles la distance (s) entre les deux pièces (1, 2) vient chaque fois diminuée oscillant autour de la distance initiale présélectée $(a_o)$ entre une grandeur maximale et minimale inférieure $(a_{max}, a_{min})$ aussi avec une haute fréquence de réglage $(f_v)$, jusqu'à ce que la distance de l'enfer $(a_o)$ entre la pièce d'oeuvre (2) et la machine-outil (1) correspondant à la tension initiale $(u_s)$ en tant que grandeur de référence est atteinte et ainsi réglée la position initiale présélectée.

2. Procédé selon la revendication 1, caractérisé en ce que lors de la phase de positionnement et de réglage chaque cycle de séparation et de rapprochement entre la pièce d'oeuvre (2) et la machine-outil (1) est commandé en fonction du temps.

3. Procédé selon la revendication 1, caractérisé en ce que lors de la phase de positionnement et de réglage chaque cycle de séparation et de rapprochement entre la pièce d'oeuvre (2) et la machine-outil (1) est commandé en fonction de la tension.

4. Procédé selon la revendication 1, caractérisé en ce que une ou plusieurs phases successives de positionnement et de réglage peuvent être déclenchées à un moment quelconque ou plutôt à chaque état d'usinage.

5. Procédé selon les revendications 1 à 3, caractérisé en ce que c'est de la distance finalement prise ($a_o$) entre le pièce d'oeuvre et la machine-outils et de la position du glissoir ainsi fixée qu'on déduit la dimension de référence pour la position initiale à prendre.

6. Dispositif à une machine-outil pour l'amorçage d'une position initiale entre la pièce d'oeuvre et l'outil notamment à une machine électro-érosion avec un circuit pour la génération d'une tension initiale, une disposition de mesure et d'analyse de la tension initiale et un transmetteur des signaux ainsi qu'un émetteur d'ordres pour le servo-moteur,
caractérisé en ce que
pour la mise en oeuvre du procédé selon une des revendications 1 à 5 la disposition de mesure et d'analyse (7) possède un appareil de mesure pour la tension de positionnement et de réglage ($u_R$) et un dispositif de réglage pour la distance initiale à présélectionner ($a_o$) et qu'elle est pourvue d'une commande à programme (9) avec un oscillateur pour le réglage de la fréquence de réglage ($f_v$) de la répetition de cycle des phases de réglage succesives à l'aide de l'augmentation et de la diminution oscillante de la distance (s) entre la pièce d'oeuvre (2) et l'outil (1).

Fig.1

Fig.2

_Fig. 3_

$S$

$V_A$

$R_1$

$R_2$

$R_3$

$f_v$

$V_R$  $V_A$

$V_R$  $V_A$

$a_{max}$

$a_0$

$a_{min}$

$0$

$0 = W$

$t$

_Fig. 4_

$u_S$

$u_R$

$0$

$t$